# EUROPEAN PATENT APPLICATION

(11) **EP 3 047 928 A1**
(43) Date of publication of application: **27.07.2016**
(21) Application number: 14845161.0
(22) Date of filing: 17.09.2014
(51) Int. Cl.: B23D 45/02, B23D 47/08

(54) **METAL PLATE CUTTING DEVICE**

(30) Priority: 17.09.2013 KR 20130111619; 07.11.2013 KR 20130134869; 23.12.2013 KR 20130161363; 24.12.2013 KR 20130162721
(71) Applicant: POSCO, Gyeongsangbuk-do 790-300 (KR); Sinjin SM Co., Ltd., Jeollabuk-do 597-841 (KR)
(72) Inventor: MOON, Chang-Ho, Pohang-si Gyeongsangbuk-do 790-300 (KR); LEE, Sung-Jin, Pohang-si Gyeongsangbuk-do 790-300 (KR); LIM, Seung-Ho, Pohang-si Gyeongsangbuk-do 790-300 (KR); KIM, Jin-Ho, Pohang-si Gyeongsangbuk-do 790-300 (KR); SHIN, Geon, Pohang-si Gyeongsangbuk-do 790-300 (KR); ROH, Kyung-Hwa, Pohang-si Gyeongsangbuk-do 790-300 (KR); CHOI, Kang-Hyouk, Pohang-si Gyeongsangbuk-do 790-300 (KR); KIM, Yeong-Hyeon, Osan-si Gyeonggi-do 447-736 (KR); KIM, Byeong-Jin, Osan-si Gyeonggi-do 447-756 (KR); KIM, Hong-Gi, Suwon-si Gyeonggi-do 443-380 (KR); NAM, Yong-Ho, Pohang-si Gyeongsangbuk-do 790-300 (KR); LEE, Myeong-Hee, Pohang-si Gyeongsangbuk-do 790-300 (KR); PARK, Bong-Hee, Hwaseong-si Gyeonggi-do 445-985 (KR); LEE,Dong-Kyu, Iksan-si Jeollabuk-do 570-803 (KR)
(74) Representative: Potter Clarkson LLP
(86) International application number: PCT/KR2014/008642
(87) International publication number: WO 2015/041457

(57) **Abstract**

The present invention relates to a metal plate cutting device and, more specifically, to a metal plate cutting device which has an easy cutting process since a rotary shaft of a saw blade part is positioned above a metal plate. The metal plate cutting device, according to one embodiment of the present invention, comprises: a support part having a metal plate disposed a top surface thereof; a frame part which is supported by the top surface of the support part; and a cutting part capable of moving along the frame part, wherein the cutting part includes a saw blade part for cutting the metal plate by rotating a rotary shaft which is positioned above the metal plate.

## Description

### [Technical Field]

The present disclosure relates to a metal plate cutting device, and more particularly, to a metal plate cutting device configured to easily cut a metal plate with a saw unit whose shaft is disposed above the metal plate.

In addition, the present disclosure relates to a metal plate cutting device including a metal plate transfer device, the metal plate transfer device being configured to precisely transfer a metal plate to a cutting position regardless of the thickness of the metal plate.

In addition, the present disclosure relates to a metal plate cutting device that is configured to vibrate less and precisely machine a very thick metal plate with low dimensional deviation.

### [Background Art]

In the related art, metal plates, particularly thick metal plates, are cut using a gas torch. When a metal plate is cut using a gas torch, a portion of the metal plate heated using the gas torch reacts with oxygen and melts by oxidation heat, and thus the molten portion flows downward due to gravity, thereby forming a slit in the metal plate and cutting the metal plate.

In this case, while molten metal flows downward, some of the molten metal remains and solidifies on lower sides of cut sections, edges, and a lower surface of the metal plate, thereby causing the formation of burrs. These burrs are common in cutting processes using plasma, a laser, Brown's gas, as well as a gas torch. That is, burrs are formed in any cutting method in which a portion of a material is melted to form a slit and thus to cut the material.

Burrs formed on metal plates during a cutting process are defects spoiling the shapes of the metal plates and the shapes or structures of final products such as ships, steel pipes, or structural members manufactured by welding or machining the metal plates. To address these problems, cut sections of metal plates on which burrs are formed may be processed through a secondary process. However, such secondary processes result in consumption of additional time and costs, and it may be difficult to completely remove burrs even though such secondary processes are performed.

### [Disclosure]

### [Technical Problem]

An aspect of the present disclosure may provide a metal plate cutting device configured to cut a metal plate while improving the quality of cut sections by preventing the formation of burrs.

An aspect of the present disclosure may also provide a metal plate cutting device including a metal plate transfer device, the metal plate transfer device being configured to stably clamp and align a metal plate and precisely transfer the metal plate to a cutting position regardless of the thickness of the metal plate.

An aspect of the present disclosure may also provide a metal plate cutting device configured to vibrate less and precisely machine a very thick metal plate with low dimensional deviation.

### [Technical Solution]

According to an aspect of the present disclosure, a metal plate cutting device may include: a table configured to receive a metal plate on an upper surface thereof; a frame unit supported on the upper surface of the table; and a cutting unit movable along the frame unit, wherein the cutting unit may include a saw unit configured to cut the metal plate while rotating on a rotation shaft located above the metal plate.

When the cutting unit is moved right along the frame unit, the saw unit may be rotated clockwise to cut the metal plate, and when the cutting unit is moved left along the frame unit, the saw unit may be rotated counterclockwise to cut the metal plate.

While the cutting unit is moved along the frame unit, the saw unit may be rotated to cut the metal plate.

The metal plate cutting device may further include: a first driving unit configured to move the cutting unit; and a second driving unit configured to rotate the saw unit.

The frame unit may include a screw part, and as the first driving unit rotates the screw part, the cutting unit connected to the screw part may be moved.

The first driving unit may drive a transfer rail to move the cutting unit connected to the transfer rail.

The frame unit may include: a first frame unit supported by the table; and a second frame unit bent from the first frame unit and parallel with the upper surface of the table, wherein the cutting unit may be moved along the second frame unit.

The metal plate cutting device may further include a separator disposed at a rear side of the cutting unit in a moving direction of the cutting unit so as to space cut sections of the metal plate a predetermined distance from each other after the cutting unit passes.

The separator may include: a wedge part configured to be disposed between the cut sections of the metal plate; and a third driving unit configured to move the wedge part, wherein the third driving unit may insert the wedge part between the cut sections of the metal plate after the cutting unit moves a predetermined distance.

The table may include a main body and a support disposed on the main body to support the metal plate.

The support may include a plurality of ball casters configured to make point contact with the metal plate.

The metal plate cutting device may further include a loading unit configured to load the metal plate onto the table.

The metal plate cutting device may further include a fixing unit configured to fix the metal plate by pressing the metal plate toward the table.

Heat-dissipating holes may be formed in the saw unit to dissipate heat from the saw unit.

The metal plate cutting device may include a pair of cutting units.

The cutting unit may be moved in parallel with the upper surface of the table.

The saw unit may have a circular shape.

The first driving unit may be a hydraulic cylinder.

### [Advantageous Effects]

According to exemplary embodiments of the present disclosure, since the metal plate cutting device cuts a metal plate by rotating the saw unit of the cutting unit, burrs are not formed on cut sections of the metal plate, and thus the quality of the cut sections may be improved. In addition, since a secondary machining process is not performed, costs and time may be saved.

In addition, according to the exemplary embodiments of the present disclosure, even a very thick and wide metal plate (having a thickness of 100 mm or greater) may be machined with low dimensional deviation. Since the vibration of the metal plate cutting device is effectively reduced, cutting quality may be improved, and the lifespan of circular saws may be increased.

Furthermore, according to the exemplary embodiments of the present disclosure, since structural noise is reduced, comfortable working environments may be provided to workers, and cutting efficiency may be increased.

### [Description of Drawings]

FIG. 1 is a perspective view illustrating a metal plate cutting device according to an exemplary embodiment of the present disclosure.
FIG. 2 is a frontal cross-sectional view schematically illustrating the metal plate cutting device illustrated in FIG. 1.
FIG. 3 is a side cross-sectional view schematically illustrating the metal plate cutting device illustrated in FIG. 1.
FIGS. 4 through 6 are views illustrating an example for comparison with the metal plate cutting device illustrated in FIG. 1.
FIGS. 7 and 8 are schematic views illustrating distribution of forces when a metal plate is cut using a saw unit of the metal plate cutting device illustrated in FIG. 1.
FIG. 9 is a frontal cross-sectional view schematically illustrating a cutting unit of the metal plate cutting device illustrated in FIG. 1.
FIG. 10 is a graph illustrating the cutting speed of the metal plate cutting device illustrated in FIG. 1.
FIG. 11 is an image illustrating a section of a metal plate cut with a gas torch.
FIG. 12 is an image illustrating a section of a metal plate cut with the metal plate cutting device illustrated in FIG. 1.
FIG. 13 is a frontal cross-sectional view schematically illustrating a modification of the cutting unit of the metal plate cutting device illustrated in FIG. 9.
FIG. 14 is a perspective view illustrating a metal plate and the saw unit of the metal plate cutting device illustrated in FIG. 1.
FIG. 15 is a perspective view illustrating a metal plate cutting device according to another exemplary embodiment of the present disclosure.
FIG. 16 is a frontal cross-sectional view schematically illustrating the metal plate cutting device illustrated in FIG. 15.
FIG. 17 is a frontal cross-sectional view schematically illustrating a metal plate cutting device according to another exemplary embodiment of the present disclosure.
FIGS. 18 through 20 are views illustrating how the metal plate cutting device illustrated in FIG. 17 is operated.
FIG. 21 is a perspective view illustrating a metal plate cutting device according to another exemplary embodiment of the present disclosure.
FIG. 22 is a detailed view illustrating a cutting unit illustrated in FIG. 21, according to the other exemplary embodiment of the present disclosure.
FIG. 23 is a view illustrating a state in which the cutting unit illustrated in FIG. 21 is coupled to a transfer rail according to the other exemplary embodiment of the present disclosure.
FIG. 24 is a schematic view illustrating directions in which the vibration of the metal plate cutting device illustrated in FIG. 21 is reduced according to the other exemplary embodiment of the present disclosure.
FIG. 25 is a cross-sectional view illustrating the inside of the metal plate cutting device illustrated in FIG. 21, according to the other exemplary embodiment of the present disclosure.
FIG. 26 is a detailed view illustrating oilless bearings embedded in a housing and partially exposed from the housing, according to the other exemplary embodiment shown in FIG. 21.
FIG. 27 is a perspective view illustrating a metal plate transfer device for a metal plate cutting device according to an exemplary embodiment of the present disclosure.
FIG. 28 is a side view illustrating the metal plate transfer device illustrated in FIG. 27.
FIG. 29 is a perspective view illustrating a clamping unit illustrated in FIG. 27, according to the exemplary embodiment of the present disclosure.
FIG. 30 is a side perspective view illustrating the clamping unit illustrated in FIG. 27, according to the exemplary embodiment of the present disclosure.

### [Best Mode]

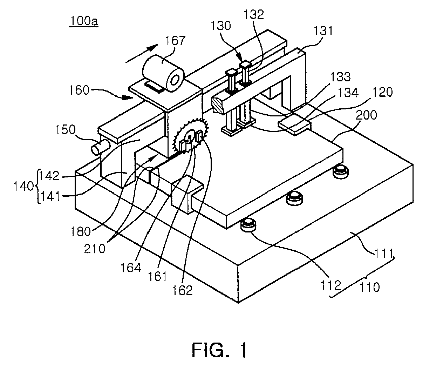

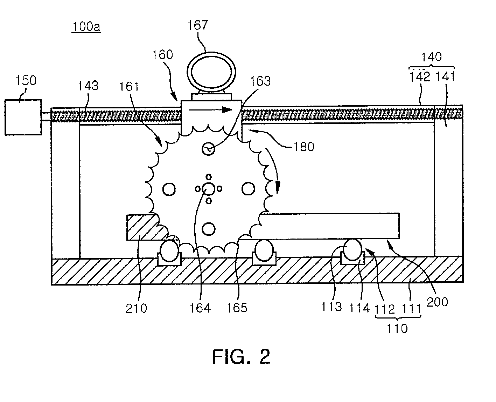

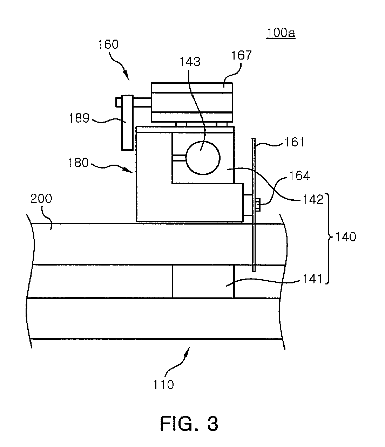

FIG. 1 is a perspective view illustrating a metal plate cutting device 100a according to an exemplary embodiment of the present disclosure, and FIG. 2 is a frontal cross-sectional view schematically illustrating the metal plate cutting device 100a illustrated in FIG. 1. FIG. 3 is a side cross-sectional view schematically illustrating the metal plate cutting device 100a illustrated in FIG. 1. Hereinafter, the metal plate cutting device 100a of the exemplary embodiment will be described with reference to FIGS. 1 through 3.

As shown in FIGS. 1 through 3, the metal plate cutting device 100a of the exemplary embodiment may include a table 110, a frame unit 140, and a cutting unit 160. The cutting unit 160 may include: a first driving unit 167; a saw unit 161 having a rotation shaft 164 disposed above a metal prate 200 placed on an upper surface of the table 110; and a power transmission unit 180 configured to transmit driving power from the first driving unit 167 to the saw unit 161.

The table 110 is a base of the metal plate cutting device 100a, and the metal plate 200 is placed on the upper surface of the table 110.

The table 110 may include: a main body 111 shaped like a flat plate; and a support 112 disposed on the main body 111 to support the metal plate 200 with respect to the main body 111. For example, the support 112 may include a plurality of ball casters configured to prevent the formation of defects such as scratches on the metal plate 200 when the metal plate 200 is moved. Such ball casters may include balls 113 disposed in housings 114 in a freely rotatable manner, and springs may be disposed between the balls 113 and the housings 114 so as to stably support the metal plate 200 by enabling the balls 113 to make point contact with the metal plate 200 even if the surface of the metal plate 200 is uneven.

The metal plate 200 may be loaded onto the table 110 using a loading unit 120, and in this case, the loading unit 120 may be operated by hydraulic power. In addition, the loading unit 120 may unload the metal plate 200 from the metal plate cutting device 100a after the metal plate 200 is cut. Members such as rollers may be disposed in an exit region of the table 110 so as to smoothly unload the metal plate 200 from the table 110.

In addition, the table 110 may include a fixing unit 130 configured to press the metal plate 200 toward the table 110 for fixing of the metal plate 200. The fixing unit 130 may be lowered to press an upper surface of the metal plate 200, and owing to the fixing unit 130, the metal plate 200 may be set in place during a cutting process. For example, the fixing unit 130 may include a support bar 131, hydraulic units 132, and clamping plates 134. If clamping shafts 133 are extended by operating the hydraulic units 132 connected to the support bar 131, the clamping plates 134 may be pushed against the upper surface of the metal plate 200 to fix the metal plate 200.

The fixing unit 130 includes the clamping shafts 133 and the clamping plates 134 having a circular or other shape such that during a cutting process, the metal plate 200 having a relatively long cutting length may be fixed by operating the hydraulic units 132 to vertically press the upper surface of the metal plate 200 with the clamping shafts 133 and the clamping plates 134.

The frame unit 140 is supported on the upper surface of the table 110 on which the metal plate 200 is placed, so as to guide and support the cutting unit 160.

For example, the frame unit 140 may be supported on an upper surface of the main body 111 of the table 110. In addition, the frame unit 140 may include: a first frame unit 141 connected to the table 110; and a second frame unit 142 bent from the first frame unit 141 and extending in parallel with the upper surface of the table 110. In this case, a pair of first frame units 141 may be provided, and the second frame unit 142 may be connected to the pair of first frame units 141. Thus, the frame unit 140 may have a Π shape as a whole. The first frame units 141 support the second frame unit 142 with respect to the table 110, and the second frame unit 142 functions as a rail or guide on which the cutting unit 160 is movable.

The second frame unit 142 may include a screw part 143 on which a thread is formed, and a second driving unit 150 such as a motor may be disposed close to the second frame unit 142 so as to rotate the screw part 143. The power transmission unit 180 may include a member engaged with the screw part 143 of the second frame unit 142, and thus if the screw part 143 is rotated, the power transmission unit 180 may be moved together with the saw unit 161 and the first driving unit 167, that is, the cutting unit 160 connected to the power transmission unit 180.

While moving along the frame unit 140 in parallel with the upper surface of the table 110, the cutting unit 160 cuts the metal plate 200. The cutting unit 160 may include the first driving unit 167, the saw unit 161, and the power transmission unit 180 configured to transmit driving power from the first driving unit 167 to the saw unit 161 for rotating the saw unit 161.

The cutting unit 160 may be moved along the second frame unit 142 to a cutting position of the metal plate 200. Since the cutting unit 160 is moved along the second frame unit 142, the metal plate 200 may be cut in a direction parallel with the second frame unit 142. The second driving unit 150 may move the cutting unit 160. For example, the second driving unit 150 may move the cutting unit 160 by rotating the screw part 143 of the second frame unit 142 screw-coupled to the cutting unit 160. However, the current exemplary embodiment is not limited thereto. For example, the second driving unit 150 may include a hydraulic cylinder to directly move the cutting unit 160, and in this case, the second frame unit 142 may guide the cutting unit 160. In another example, the second driving unit 150 may drive a separate transfer rail such as a conveyor belt to move the cutting unit 160 connected to the transfer rail. This configuration for moving the cutting unit 160 by driving a transfer rail using the second driving unit 150 may be used when the metal plate 200 has a relatively large length.

The cutting unit 160 may include the saw unit 161 as a member directly cutting the metal plate 200. The saw unit 161 may have a circular plate shape with a plurality of saw teeth 165, and may cut the metal plate 200 while being rotated by driving power transmitted from the first driving unit 167 such as a motor. While the cutting unit 160 is moved horizontally along the second frame unit 142, the saw unit 161 is rotated to cut the metal plate 200. Thus, the metal plate 200 may be easily cut even if the metal plate 200 is relatively long. In addition, pads 162 may be additionally used to prevent the saw unit 161 from shaking left and right when the saw unit 161 cuts the metal plate 200. In addition, heat-dissipating holes 163 may be formed in the saw unit 161 to dissipate heat from the saw unit 161. During cutting, the heat-dissipating holes 163 may reduce stress generated in the saw unit 161 by dissipating heat generated by friction.

In addition, the rotation shaft 164 of the saw unit 161 may be disposed above the metal plate 200, that is, outside a surface of the metal plate 200 opposite the table 110, and the saw unit 161 may be rotated clockwise or counterclockwise. Here, the rotation direction of the saw unit 161 may be determined according to the moving direction of the cutting unit 160 and the fact that the rotation shaft 164 of the saw unit 161 is disposed above the metal plate 200. This will be described in detail later.

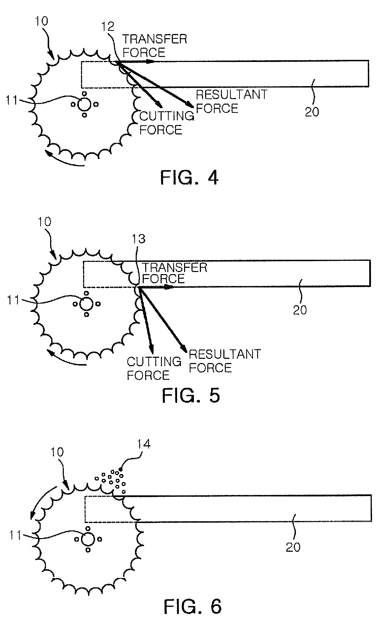

FIGS. 4 through 6 are views illustrating an example for comparison with the metal plate cutting device 100a illustrated in FIG. 1, and FIGS. 7 and 8 are schematic views illustrating distribution of forces when the metal plate 200 is cut using the saw unit 161 of the metal plate cutting device 100a illustrated in FIG. 1. Hereinafter, the saw unit 161 of the metal plate cutting device 100a of the exemplary embodiment will be described in more detail with reference to FIGS. 4 through 8.

As shown in FIGS. 4 and 5, if a rotation shaft 11 of a saw unit 10 is located below a metal plate 20, and the saw unit 10 is rotated clockwise while being moved to the right, the resultant force of a transfer force and a cutting force may act in a direction such that the metal plate 20 is pushed away from the saw unit 10. That is, in both the case of a tooth 12 engaging with the metal plate 20 as shown in FIG. 4 and the case of a tooth 13 disengaging from the metal plate 20 as shown in FIG. 5, the resultant force has a component acting to the right as illustrated in FIGS. 4 and 5. That is, a repulsive force may be applied such that the metal plate 20 may be pushed away from the saw unit 10. Therefore, cutting may not be efficiently performed, and the saw unit 10 may idle. To address this, the saw unit 10 may be rotated counterclockwise as shown in FIG. 6. In this case, however, chips 14 generated while cutting the metal plate 20 with the saw unit 10 may move over the saw unit 10 and may stick to an upper portion of the metal plate 20 or a driving unit, and thus cutting may not be smoothly performed.

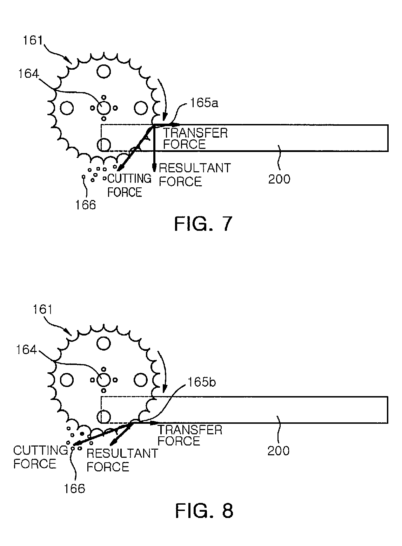

However, in the metal plate cutting device 100a of the exemplary embodiment of the present disclosure, the rotation shaft 164 of the saw unit 161 is located above the metal plate 200, and thus a repulsive force may not act between the saw unit 161 and the metal plate 200, and chips 166 may be smoothly discharged. In detail, as shown in FIG. 7, when a tooth 165a engaging with the metal plate 200 is considered, the resultant force of a cutting force and a transfer force acts downward, and thus the metal plate 200 is not pushed away from the saw unit 161. In addition, when a tooth 165b disengaging from the metal plate 200 is considered as shown in FIG. 8, the resultant force pulls the metal plate 200. That is, an attractive force acts between the metal plate 200 and the saw unit 161, and thus the metal plate 200 may be smoothly cut without being pushed away. Furthermore, since the cutting unit 160 is moved horizontally, the influence of cutting reaction force may be minimized, and the movement of the cutting unit 160 may be smooth even if a relatively small amount of transfer force is applied because a cutting area is small. Therefore, the second driving unit 150 may include a low-capacity motor instead of including a high-capacity motor. In addition, since chips 166 move downward from the metal plate 200 along the saw unit 161, the chips 166 may easily be discharged. The rotation direction and transfer direction of the saw unit 161 may be set to match each other as described above, so as to easily discharge chips 166 while preventing the saw unit 161 and the metal plate 200 from repelling each other. That is, if the transfer direction of the saw unit 161 is right as shown in FIGS. 7 and 8, the saw unit 161 may be rotated clockwise, and if the transfer direction of the saw unit 161 is left, the saw unit 161 may be rotated counterclockwise.

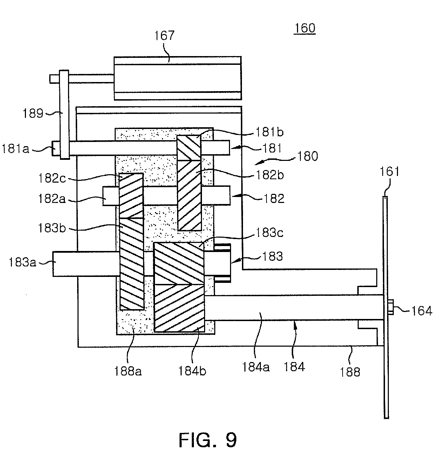

FIG. 9 is a frontal cross-sectional view schematically illustrating the cutting unit 160 of the metal plate cutting device 100a illustrated in FIG. 1. Hereinafter, the cutting unit 160, the power transmission unit 180, and the first driving unit 167 of the exemplary embodiment will be described in more detail with reference to FIG. 9.

As shown in FIG. 9, according to the exemplary embodiment, the power transmission unit 180 may include a plurality of gear units 181, 182, 183, and 184 so as to transmit driving power of the first driving unit 167 to the saw unit 161 in a speed reduction manner. The gear units 181, 182, 183, and 184 may include: shafts 181a, 182a, 183a, and 184a; and gears 181b, 182b, 182c, 183b, 183c, and 184b connected to the shafts 181a, 182a, 183a, and 184a and engaged with each other. Although the exemplary embodiment is described below in detail, the scope of the present disclosure is not limited thereto.

For example, the power transmission unit 180 of the exemplary embodiment may include a pulley 189, the gear unit 181 as an input gear unit, the gear unit 182 as a first gear unit, the gear unit 183 as a second gear unit, and the gear unit 184 as an output gear unit, and the input gear unit 181, the first gear unit 182, the second gear unit 183, and the output gear unit 184 may be sequentially arranged along a power transmission line from the first driving unit 167 to the saw unit 161. A side of the pulley 189 is connected to the first driving unit 167, and another side of the pulley 189 is connected to the input gear unit 181. Thus, if the first driving unit 167 is operated, the pulley 189 is rotated, thereby transmitting driving power to the input gear unit 181. In this case, although a speed reduction by the pulley 189 is not a speed reduction intended in the exemplary embodiment, a zeroth speed reduction may be realized by properly adjusting the diameter of a portion of the first driving unit 167 connected to the pulley 189 and the diameter of a portion of the input gear unit 181 connected to the pulley 189. For example, if the diameter of the portion of the first driving unit 167 connected to the pulley 189 is adjusted to be equal to the diameter of the portion of the input gear unit 181 connected to the pulley 189, a zeroth-step speed reduction may be realized.

The input gear unit 181 is rotated by the driving power transmitted through the pulley 189, and thus the gear 181b (input gear 181b) of the input gear unit 181 is also rotated. As the input gear 181b is rotated, the gear 182b (first first gear 182b) of the first gear unit 182 is rotated. Here, a first-step speed reduction may be realized by adjusting the diameter of the first first gear 182b relatively distant from the first driving unit 167 to be greater than the diameter of the input gear 181b relatively close to the first driving unit 167. In addition, the driving power is transmitted from the gear 182c (first second gear 182c) of the first gear unit 182 to the gear 183b (second first gear 183b) of the second gear unit 183. Here, a second-step speed reduction may be realized by adjusting the diameter of the second first gear 183b to be greater than the diameter of the first second gear 182c. In addition, the driving power is transmitted from the gear 183c (second second gear 183c) of the second gear unit 183 to the gear 184b (output gear 184b) of the output gear unit 184. Here, a third-step speed reduction may be realized by adjusting the diameter of the second second gear 183c to be smaller than the diameter of the output gear 184b. In this manner, driving power of the first driving unit 167 input to the input gear unit 181 may be transmitted through the gear units 181, 182, 183, and 184 having a speed reduction function, and may be input to the saw unit 161 through the output gear unit 184 so as to rotate the saw unit 161.

In the above, gears of the same gear unit, such as the gears 182b and 182c of the first gear unit 182 and the gears 183b and 183c of the second gear unit 183, may be sized in such a manner that the diameters of the gears 182b and 183b connected to the gear units 181 and 182 relatively close to the first driving unit 167 are greater than the diameters of the gears 182c and 183c of the gear units 183 and 184 relatively distant from the first driving unit 167. In this case, the diameters of the gears 181b, 182b, 182c, 183b, 183c, and 184b of the gear units 181, 182, 183, and 184 may not be excessively large, and thus the volume of the power transmission unit 180 may not be large. As described above, three-step speed reduction (speed reduction in three steps) is realized by arranging two gear units (the first and second gear units 182 and 183) between the input gear unit 181 and the output gear unit 184. According to the exemplary embodiment of the present disclosure, speed reduction may be realized in three or more steps at low gear ratios so as to prevent a sharp speed reduction. Therefore, the gears 181b, 182b, 182c, 183b, 183c, and 184b may not have an excessively large diameter, and thus problems such as breakage, noises, or vibrations caused by excessively large gears may not occur. In addition, although the capacity of the first driving unit 167 is low, large torque may be generated, and the rotation directions of the gears 181b, 182b, 182c, 183b, 183c, and 184b may be controlled. In this case, the gear ratio between the output gear unit 184 and the second gear unit 183 may be adjusted to be 2 or less so as to prevent gear breakage or vibration caused by torque variations during a cutting process. In addition, the diameters of the shafts 181a, 182a, 183a, and 184a of the gear units 181, 182, 183, and 184 may increase in a direction away from the first driving unit 167. In this case, even if large cutting loads and torque are applied to the output gear unit 184 while the metal plate 200 is cut, the possibility of fatigue failure and twisting of the output gear unit 184 may be low.

In addition, the power transmission unit 180 may further include a housing unit 188 accommodating the gear units 181, 182, 183, and 184. The housing unit 188 may have an L-shape because the output gear unit 184 connected to the saw unit 161 is longer than the other gear units 181, 182, and 183. A region of the housing unit 188 located above the output gear unit 184 may face the second frame unit 142 and may function as a guide when the cutting unit 160 is moved (refer to FIG. 3). In addition, the housing unit 188 may be filled with a lubricant oil 188a circulating to the inside and outside of the housing unit 188 so as to guarantee smooth and low-noise rotations of the gear units 181, 182, 183, and 184.

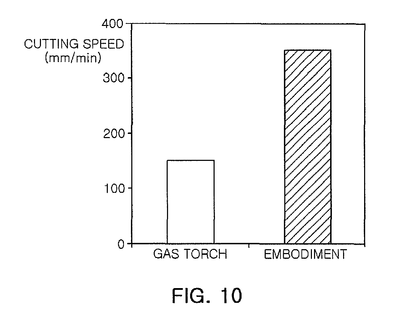

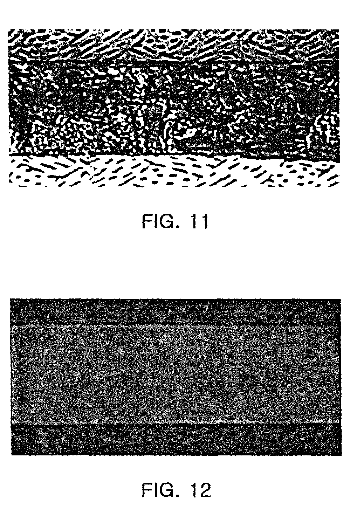

FIG. 10 is a graph illustrating the cutting speed of the metal plate cutting device 100a illustrated in FIG. 1. FIG. 11 is an image illustrating a section of a metal plate cut with a gas torch, and FIG. 12 is an image illustrating a section of a metal plate cut with the metal plate cutting device 100a illustrated in FIG. 1. Hereinafter, the metal plate cutting device 100a of the exemplary embodiment will be described in more detail with reference to FIGS. 10 to 12.

FIG. 10 illustrates results of a test performed on metal plates having a strength of 400 MPa, a cut length of 1200 mm, and a thickness of 200 mm. When a gas torch was used, the speed of cutting was only about 150 mm/min. However, when the metal plate cutting device 100a of the exemplary embodiment was used, the speed of cutting was about 350 mm/min, that is, two or more times the speed of cutting with the gas torch. In the test, the saw unit 161 of the metal plate cutting device 100a was circular. However, when a band type saw unit was used, the speed of cutting was low on the level of 30 to 40 mm/min. That is, when the saw unit 161 has a circular shape, high-speed cutting may be guaranteed. In addition, as shown in FIG. 11, when the gas torch was used, a cut section of the metal plate was not smooth because of burrs. However, as shown in FIG. 12, when the metal plate cutting device 100a was used, a cut section of the metal plate was smooth. In the test, when the gas torch was used, the range of dimensional deviation was 2 mm to 3 mm. However, when the metal plate cutting device 100a was used, dimensional deviation was very low on the level of 0.02 mm to 0.04 mm. That is, if the metal plate cutting device 100a of the exemplary embodiment is used to cut metal plates, smooth cut sections may be obtained even though additional machining processes are not performed, and thus costs and time may be saved.

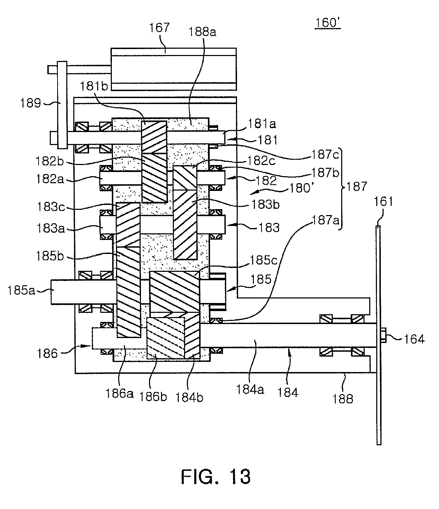

FIG. 13 is a frontal cross-sectional view schematically illustrating a modification of the cutting unit 160 of the metal plate cutting device 100a illustrated in FIG. 9 according to another exemplary of the present disclosure. Hereinafter, a cutting unit 160' will be described with reference to FIG. 13 according to the other exemplary embodiment.

A power transmission unit 180' of the cutting unit 160' of the current exemplary embodiment may further include a third gear unit 185 unlike the power transmission unit 180 of the previous exemplary embodiment. In detail, a third first gear 185b of the third gear unit 185 may engage with a second second gear 183c of a second gear unit 183, and a third second gear 185c of the third gear unit 185 may engage with an output gear 184b of an output gear unit 184, thereby adding an additional speed reduction step and realizing a four-step speed reduction (speed reduction in four steps).

In the current exemplary embodiment, the power transmission unit 180' may further include an anti-reverse rotation gear unit 186. The anti-reverse rotation gear unit 186 may include an anti-reverse rotation gear 186b, and the anti-reverse rotation gear 186b may engage with the output gear 184b of the output gear unit 184 so as to prevent reverse rotation of the output gear unit 184. The anti-reverse rotation gear unit 186 may include a well-known powder brake. The anti-reverse rotation gear unit 186 may be disposed in a region not overlapping the third gear unit 185. The use of the anti-reverse rotation gear unit 186 is not limited to the case in which the third gear unit 185 is used. For example, in the case of using up to the second gear unit 183 as in the previous embodiment, the anti-reverse rotation gear unit 186 may be used.

In addition, the power transmission unit 180' may further include bearing units 187 supporting shafts 181a, 182a, 183a, 184a, 185a, and 186a of gear units 181, 182, 183, 184, 185, and 186. The bearing units 187 may support the shafts 181a, 182a, 183a, 184a, 185a, and 186a with respect to the housing unit 188, and may include a self-aligning bearing 187a, taper roller bearings 187b, and roller or ball bearings 187c. The taper roller bearings 187b capable of supporting large loads may be fitted to an input side of the gear unit 181 (input gear unit 181), both sides of the gear unit 182 (first gear unit 182), both sides of the second gear unit 183, a side of the third gear unit 185, and both sides of the output gear unit 184. The roller or ball bearings 187c may be fitted to another side of the input gear unit 181 and another side of the third gear unit 185 because the roller or ball bearing 187c are easily movable in an axial direction. The self-aligning bearing 187a capable of self aligning may be fitted to a center position of the output gear unit 184 having a relatively large length. The use of the bearing units 187 is not limited to the current exemplary embodiment. That is, the bearing units 187 may be used in the previous embodiment.

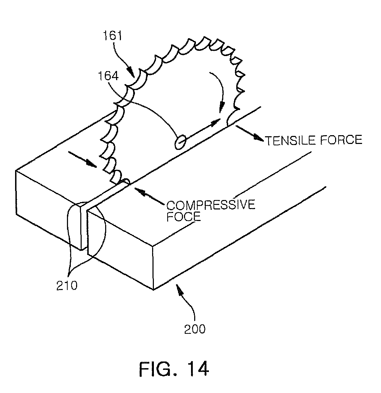

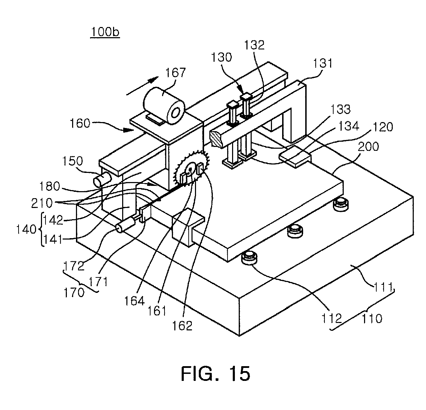

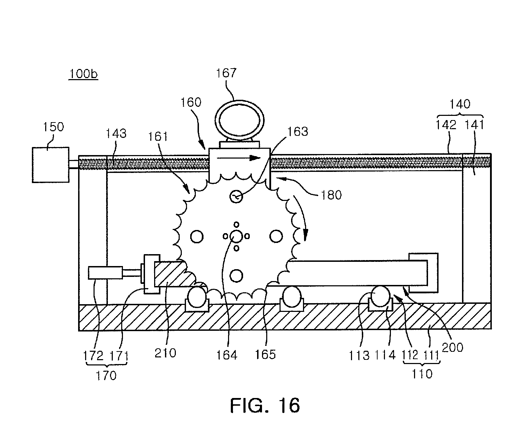

FIG. 14 is a perspective view illustrating a metal plate 200 and the saw unit 161 of the metal plate cutting device 100a illustrated in FIG. 1. FIG. 15 is a perspective view illustrating a metal plate cutting device 100b according to another exemplary embodiment of the present disclosure, and FIG. 16 is a frontal cross-sectional view schematically illustrating the metal plate cutting device 100b illustrated in FIG. 15. Hereinafter, the metal plate cutting device 100b of the other exemplary embodiment will be described with reference to FIGS. 14 to 16. In the current embodiment, elements identical or similar to those described in the previous embodiments are denoted by the same reference numerals, and repeated descriptions thereof will be omitted.

As shown in FIG. 14, when the saw unit 161 cuts the metal plate 200 while rotating and moving horizontally, tensile force may act in a region of the metal plate 200 facing a leading end of the saw unit 161, and compressive force may act in a region of the metal plate 200 facing a trailing end of the saw unit 161. Thus, the saw unit 161 may stick between cut sections 210 of the metal plate 200. In this case, the second driving unit 150 driving the cutting unit 160 may be damaged, or the first driving unit 167 rotating the saw unit 161 may be damaged.

This problem may be addressed in the current embodiment. That is, as shown in FIGS. 15 and 16, the metal plate cutting device 100b of the current embodiment may include a separator 170 configured to separate cut sections 210 of a metal plate 200, in addition to the metal plate cutting device 100b including a table 110, a frame unit 140, and a cutting unit 160. The separator 170 may be disposed at a rear side of the cutting unit 160 in a moving direction of the cutting unit 160, that is, at the left side of the cutting unit 160 in FIGS. 15 and 16. The separator 170 may be operated behind the cutting unit 160 to separate the cut sections 210 of the metal plate 200. The separator 170 may include a wedge part 171 and a third driving unit 172. If the third driving unit 172 is operated after the cutting unit 160 is moved a predetermined distance, the wedge part 171 may be moved in the same direction as the moving direction of the cutting unit and may be inserted between the cut sections 210. The wedge part 171 may taper toward an end thereof, and thus the wedge part 171 may be smoothly inserted between the cut sections 210. After the wedge part 171 is inserted between the cut sections 210 of the metal plate 200, the distance between the cut sections 210 may be constantly maintained, and thus the cutting unit 160 may easily cut the metal plate 200.

The third driving unit 172 driving the wedge part 171 may be controlled manually or using an additional control unit. In the latter case, the movement of the cutting unit 160 may be sensed so as to operate the third driving unit 172 after the cutting unit 160 passes.

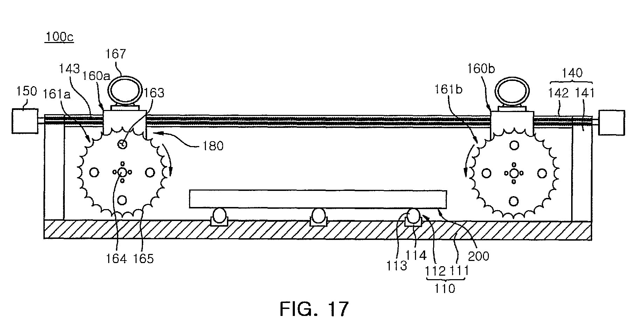

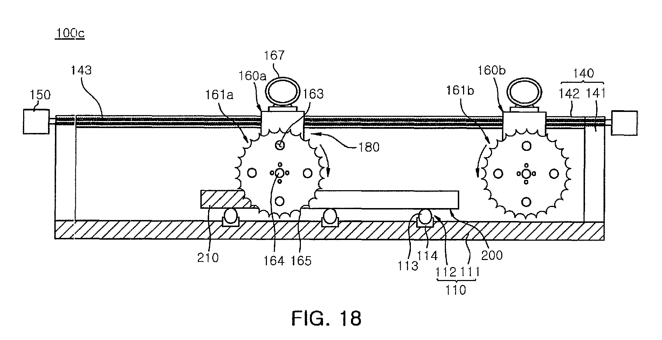

FIG. 17 is a frontal cross-sectional view schematically illustrating a metal plate cutting device 100c according to another exemplary embodiment of the present disclosure, and FIGS. 18 to 20 are views illustrating how the metal plate cutting device 100c illustrated in FIG. 17 is operated. Hereinafter, the metal plate cutting device 100c of the other exemplary embodiment will be described with reference to FIGS. 17 through 20. In the current embodiment, elements identical or similar to those described in the previous embodiments are denoted by the same reference numerals, and repeated descriptions thereof will be omitted.

As illustrated in FIG. 17, the metal plate cutting device 100c of the current exemplary embodiment may include a table 110, a frame unit 140, and cutting units 160a and 160b. The cutting units 160a and 160b may be provided as a pair. In detail, the cutting units 160a and 160b may include a first cutting unit 160a and a second cutting unit 160b, and the first and second cutting units 160a and 160b may respectively include first and second saw units 161a and 161b.

In an initial state, the first and second cutting units 160a and 160b may be disposed at opposite positions. For example, as shown in FIG. 14, the first cutting unit 160a may be disposed at a left side, and the second cutting unit 160b may be disposed at a right side. The first and second cutting units 160a and 160b may be operated at different times to prevent interference. In this case, the first and second cutting units 160a and 160b may cut different regions of a metal plate 200. An exemplary operation of the first and second cutting units 160a and 160b will now be described.

First, as shown in FIG. 18, while moving the first cutting unit 160a, the first saw unit 161a may be rotated to cut a portion of the metal plate 200. At this time, since the first cutting unit 160a is moved to the right, the first saw unit 161a may cut the metal plate 200 while being rotated clockwise.

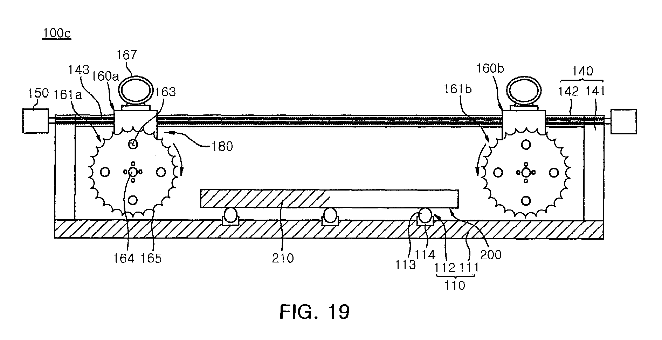

Next, as shown in FIG. 19, the first cutting unit 160a may be moved back to its initial position. The first cutting unit 160a is moved back to its initial position so as to prevent interference with the second cutting unit 160b.

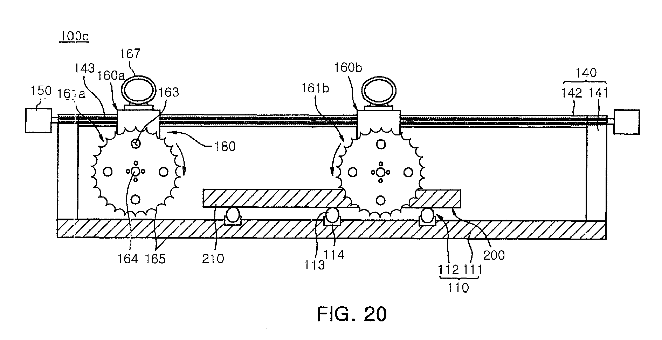

Thereafter, as shown in FIG. 20, the second cutting unit 160b may be moved. At this time, since the second cutting unit 160b is moved to the left unlike the first cutting unit 160a, the second saw unit 161b may cut the metal plate 200 while being rotated counterclockwise. Then, the metal plate 200 may be completely cut into two parts. After that, the second cutting unit 160b may be moved back to its initial position as shown in FIG. 16. In the above, when the first cutting unit 160a is moved back to its initial position, the second cutting unit 160b may be moved to the left.

### FRAME STRUCTURE

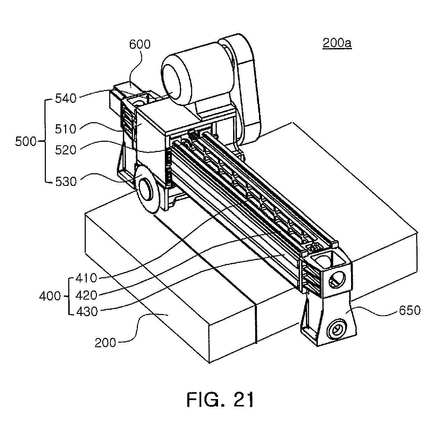

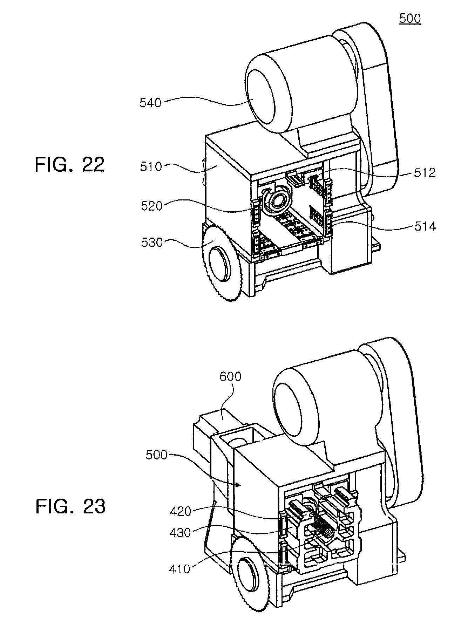

FIG. 21 is a perspective view illustrating a metal plate cutting device 200a according to another exemplary embodiment of the present disclosure. FIG. 22 is a detailed view illustrating a cutting unit 500 illustrated in FIG. 21 according to the other exemplary embodiment of the present disclosure, and FIG. 23 is a view illustrating a state in which the cutting unit 500 illustrated in FIG. 21 is coupled to a transfer rail 400 according to the other exemplary embodiment of the present disclosure.

As shown in FIGS. 21 to 23, the metal plate cutting device 200a includes: the transfer rail 400 in which a transfer shaft 410 extends in a first direction; and the cutting unit 500 coupled to the transfer shaft 410 while surrounding a portion of the transfer rail 400. The cutting unit 500 may be moved in the first direction so as to cut a material such as a metal plate 200.

In addition, the metal plate cutting device 200a may further include: a transfer motor 600 disposed on an end of the transfer rail 400 and connected to an end of the transfer shaft 410 so as to transmit rotational power to the transfer shaft 410; and base units 650 coupled to both ends of the transfer rail 400 to support the weight of both the transfer rail 400 and the cutting unit 500.

For clarity of description, the cutting unit 500 will be described, and then a relationship between the cutting unit 500 and the transfer rail 400 and other elements will be described.

According to the current exemplary embodiment, the cutting unit 500 may include: a housing 510 surrounding a portion of the transfer rail 400; a transfer member 520 extending in the housing 510 from an inner surface of the housing 510 and coupled to the transfer shaft 410; and a circular saw 530 disposed on a lower side of the housing 510 and configured to rotate on a rotation shaft extending in a second direction perpendicular to the first direction.

The circular saw 530 may receive rotational power from a cutter motor 540 disposed on a side of the housing 510.

According to the current exemplary embodiment, the transfer shaft 410 may be a screw shaft, and the transfer member 520 may be a ball screw member coupled to the screw shaft 410 for converting rotational motion into linear motion.

In this case, the transfer motor 600, disposed on the end of the transfer rail 400 to provide rotational power to the screw shaft 410, may be a servo motor.

According to the current exemplary embodiment, the transfer rail 400 has a cavity accommodating the screw shaft 410 and the ball screw member 520, and the ball screw member 520 extends from an inner upper surface of the housing 510 into the cavity of the transfer rail 400.

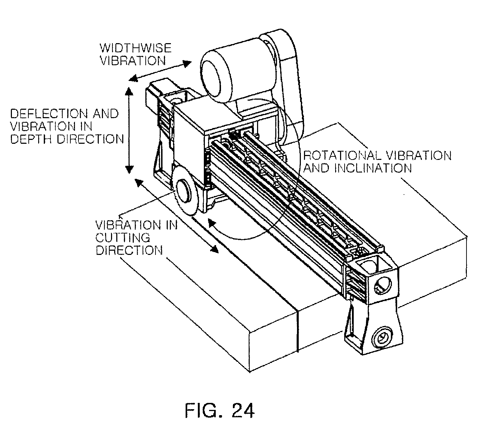

FIG. 24 is a schematic view illustrating directions in which the vibration of the metal plate cutting device 200a of the embodiment illustrated in FIG. 21 is reduced.

As shown in FIG. 24, if the vibration of the circular saw 530 is transmitted to the cutting unit 500, the cutting unit 500 may vibrate in cutting, width, depth, and inclination directions. In addition, the cutting unit 500 including the cutter motor 540 may deflect in the depth direction or may be inclined in a rotation direction because of the weight of the cutting unit 500 and a cutting reaction force.

Therefore, in the metal plate cutting device 200a of the current exemplary embodiment, the cutting unit 500 is controlled to move along an exactly straight path by using the screw shaft 410, the ball screw member 520 coupled to the screw shaft 410, and the servo motor 600 providing rotational power to the screw shaft 410.

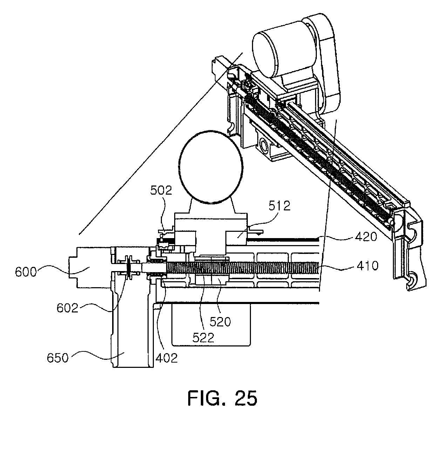

According to the current exemplary embodiment of the present disclosure, the position of the cutting unit 500 may be precisely controlled during a cutting process while reducing vibration of the cutting unit 500. Hereinafter, the metal plate cutting device 200a of the current exemplary embodiment will be described in more detail with respect to FIG. 25.

FIG. 25 is a cross-sectional view illustrating the inside of the metal plate cutting device 200a according to the current exemplary embodiment of the present disclosure.

Referring to FIG. 25, the servo motor 600 is connected to the end of the screw shaft 410 to rotate the screw shaft 410. According to the exemplary embodiment, a disc-type coupler 602 may be used to easily assemble and dissemble the servo motor 600 and the screw shaft 410.

The screw shaft 410 may be supported on bearing blocks 402 disposed on both end portions of the transfer rail 400, and may convert rotational motion of the servo motor 600 into linear motion of the ball screw member 520.

Metal balls 522 are disposed between the screw shaft 410 and the ball screw member 520 to increase an effective contact area between the screw shaft 410 and the ball screw member 520, thereby improving power transmission efficiency and preventing breakage of the screw shaft 410 and the ball screw member 520.

In the exemplary embodiment, the ball screw member 520 may have a nut shape, and as shown in FIG. 25, two ball screw members 520 may be used so as to minimize backlash caused by vibration in a cutting direction.

The ball screw member 520 is coupled to the housing 510 in such a manner that the ball screw member 520 extends in the housing 510 from the inner upper surface of the housing 510. Thus, if the ball screw member 520 is linearly moved, the cutting unit 500 including the housing 510 connected to the ball screw member 520 is also linearly moved.

Referring to FIGS. 21 to 25, according to the current exemplary embodiment, the transfer rail 400 may include a plurality of guide rails 420 protruding upward from opposite sides with respect to the screw shaft 410 and extending in the first direction.

In addition, the housing 510 of the cutting unit 500 may include a plurality of slidable members 512 configured to slide in the first direction in a state in which the slidable members 512 are respectively coupled to the guide rails 420.

That is, when the cutting unit 500 is driven by the servo motor 600, the cutting unit 500 is guided along a straight path by the guide rails 420.

As illustrated in FIGS. 21 to 25, the cutting unit 500 including components such as the circular saw 530 and the cutter motor 540 is heavy, and a large portion of the weight of the cutting unit 500 is the weight of the cutter motor 540, thereby increasing the possibility of unstable contact. To prevent this, two guide rails 420 and two slidable members 512 are symmetrically arranged with respect to the screw shaft 410.

In addition, according to the current exemplary embodiment, the housing 510 may include a plurality of oilless bearings 514 embedded in the housing 510 and partially exposed from inner surfaces of the housing 510.

Therefore, the housing 510 may be moved in the first direction in a state in which the housing 510 makes contact with outer surfaces of the transfer rail 400 through the oilless bearings 514.

In this case, a plurality of guide parts 430 corresponding to the oilless bearings 514 may be formed on the outer surfaces of the transfer rail 400 in such a manner that the guide parts 430 protrude in width directions of the transfer rail 400 and extend in the first direction.

That is, according to the exemplary embodiment, the housing 510 may be moved in the first direction in a state in which the oilless bearings 514 of the housing 510 are in contact with the guide parts 430 of the transfer rail 400, and thus the cutting unit 500 including the housing 510 may be moved in the first direction.

As described above, since a large portion of the weight of the cutting unit 500 is the weight of the cutter motor 540, the circular saw 530 may cut a material such as a metal plate 200 at an oblique angle with respect to the metal plate 200. This may result in dimensional deviation in the thickness direction of the cut material, and thus the quality of the cut material may be low.

However, since the guide parts 430 of the transfer rail 400 maintain tight contact with the oilless bearings 514 of the housing 510, the cutting unit 500 may not be inclined.

According to the current exemplary embodiment, the transfer rail 400 has the cavity accommodating the screw shaft 410 and the ball screw member 520 as described above, and thus the deflection of the transfer rail 400 caused by the weight of the cutting unit 500 may be minimized.

In addition, as illustrated in FIGS. 21 to 25, a reinforcement structure such as a grating structure may be formed inside the transfer rail 400 to maximize the flexural rigidity of the transfer rail 400.

If the inside of the transfer rail 400 is filled with a material, the weight of the transfer rail 400 increases, and it is difficult to arrange the screw shaft 410 and the ball screw member 520 in the transfer rail 400. Thus, the cavity may be formed in a center region of the transfer rail 400 less affected by bending stress, to accommodate the screw shaft 410 and the ball screw member 520 while allowing for rotation of the screw shaft 410 and linear movement of the ball screw member 520.

In addition, so as to prevent excessive linear motion of the cutting unit 500, limiters 502 may be disposed on front and rear ends of the cutting unit 500 so that when one of the limiters 502 makes contact with a stopper of the transfer rail 400, the cutting unit may stop.

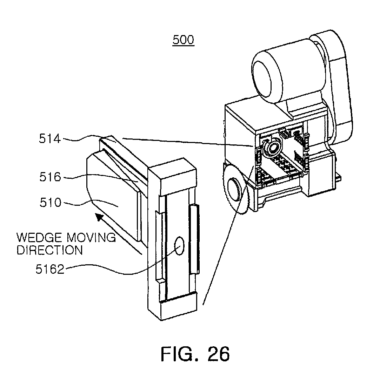

FIG. 26 is a detailed view illustrating the oilless bearings 514 embedded in the housing 510 in a partially exposed state according to the exemplary embodiment of the present disclosure.

As shown in FIG. 26, according to the exemplary embodiment, the oilless bearings 514 may be embedded in the housing 510 together with wedge members 516.

When the cutting unit 500 cuts a material in a width direction of the material while linearly moving along the transfer rail 400, the guide rails 420 and the slidable members 512 may be seperated from each other, or the guide parts 430 may be incompletely in contact with the oilless bearings 514. In addition, the deflection or assembly tolerance of the transfer rail 400 may cause incomplete contact.

Such incomplete contact may increase vibration during a cutting process, thereby decreasing the lifespan of the circular saw 530, increasing structural noise, and lowering the quality of cut sections.

Therefore, according to the current exemplary embodiment, the oilless bearings 514 are embedded in the housing 510 together with the wedge members 516 so as to adjust the heights of the oilless bearings 514 embedded in the housing 510 by using the wedge members 516.

That is, after varying the oilless bearings 514 in the housing 510 in a state in which the oilless bearings 514 are partially exposed on the inner surfaces of the housing 510, the wedge members 516 are inserted in the housing 510 at positions inside the oilless bearings 514 so as to limit the movement of the oilless bearings 514 in all directions except for the transfer direction of the cutting unit 500.

Therefore, the oilless bearings 514 are totally pushed against (fully loaded onto) the transfer rail 400, that is, the guide parts 430 of the transfer rail 400, by the wedge members 516 inserted into gaps between the housing 510 and the oilless bearings 514.

In this case, the heights of the oilless bearings 514 embedded in the housing 510 may be adjusted according to the insertion depths of the wedge members 516. In the current exemplary embodiment, wedge fixing bolts 5162 may be used to adjust the insertion depths of the wedge members 516.

For example, the wedge fixing bolts 5162 may be rotated clockwise to further insert the wedge members 516 and thus to increase the insertion depths of the wedge members 516. In this case, the oilless bearings 514 may be further pushed against the guide parts 430 and thus fully loaded onto the transfer rail 400.

Inclined structures corresponding to the wedge members 516 may be disposed at positions at which the oilless bearings 514 are embedded such that the wedge members 516 having a V-shape may push the oilless bearings 514 in directions perpendicular to the oilless bearings 514.

As illustrated in FIG. 26, the inclined structures may be provided by forming slopes in regions of the housing 510 in which the oilless bearings 514 are embedded. In another exemplary embodiment of the present disclosure, the inclined structures may be provided by arranging other wedge members in regions of the housing 510 in which the oilless bearings 514 are embedded.

In this manner, gaps between the guide rails 420 and the slidable members 512, or incomplete contact between the guide parts 430 and the oilless bearings 514 may be removed or prevented. As a result, the vibration of the metal plate cutting device 200a may be decreased.

In the above, although the oilless bearings 514 (oilless members) are described with reference to FIG. 26 in which only one oilless member is illustrated in detail, the other oilless bearings 514 may have the same structure as that illustrated in FIG. 26. The oilless bearings 514 may allow the cutting unit 500 to move only in a transfer direction, and thus the vibration of the metal plate cutting device 200a may be suppressed in width, depth, cutting, and rotation directions as illustrated in FIG. 4.

As described above, according to the exemplary embodiment of the present disclosure, a metal plate 200 to be cut may be precisely transferred using the servo motor 600 and a ball screw including the screw shaft 410, the ball screw member 520, and the metal balls 522. In addition, two ball screw members 520 may be used to reduce backlash and widthwise vibration of the ball screw.

Furthermore, two guide rails 420 are arranged, and the slidable members 512 are coupled to the guide rails 420 symmetrically with respect to the screw shaft 410 so as to support the asymmetric weight of the cutting unit 500. Therefore, the cutting unit 500 may not be inclined.

If the cutting unit 500 is inclined, dimensional deviation may increase in a thickness direction of a cut material. Thus, the guide parts 430 are additionally formed on the outer surfaces of the transfer rail 400 and brought into contact with the oilless bearings 514 of the housing 410, so as to prevent the inclination of the cutting unit 500.

The deflection and inclination of the cutting unit 500 caused by the asymmetric weight of the cutting unit 500, and gaps between the oilless bearings 514 and the guide parts 430 caused by manufacturing and assembling tolerances, may result in vibration during a cutting process. Therefore, the wedge members 516 are used to remove the gaps and minimize the generation of vibration by fully loading the oilless bearings 514 onto the guide parts 430.

### TRANSFER DEVICE FOR TRANSFERRING MATERIALS TO BE CUT TO METAL PLATE CUTTING DEVICE

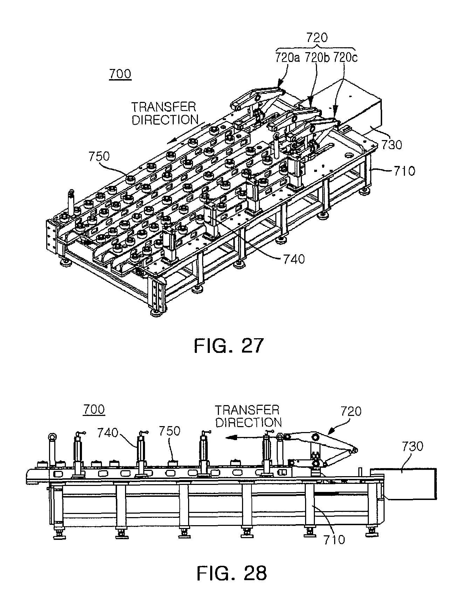

FIG. 27 is a perspective view illustrating a metal plate transfer device 700 according to an exemplary embodiment of the present disclosure, and FIG. 28 is a side view illustrating the metal plate transfer device 700 illustrated in FIG. 27. Any of the metal plate cutting devices of the exemplary embodiments of the present disclosure may be arranged together with a transfer device configured to transfer a metal plate 200 (refer to FIG. 1) to a cutting unit (refer to reference numeral 160 in FIG. 1). For example, the metal plate transfer device 700 may be arranged next to the metal plate cutting device 100a (refer to FIG. 1) in a metal plate transfer direction so as to supply a metal plate 200 to the cutting unit 160 of the metal plate cutting device 100a.

As illustrated in FIGS. 27 and 28, the metal plate transfer device 700 may include a frame 710, a transfer clamping unit 720, a transfer motor 730, guide rolls 740, and ball bearings 750. The frame 710 may be connected to the metal plate cutting device 100a (refer to FIG. 1), and may function as a base on which components of the current exemplary embodiment are arranged. The metal plate cutting device 100a (refer to FIG. 1) may include circular saw teeth 165 (refer to FIG. 2) for cutting a metal plate. The metal plate cutting device 100a may have the structure illustrated in FIG. 1.

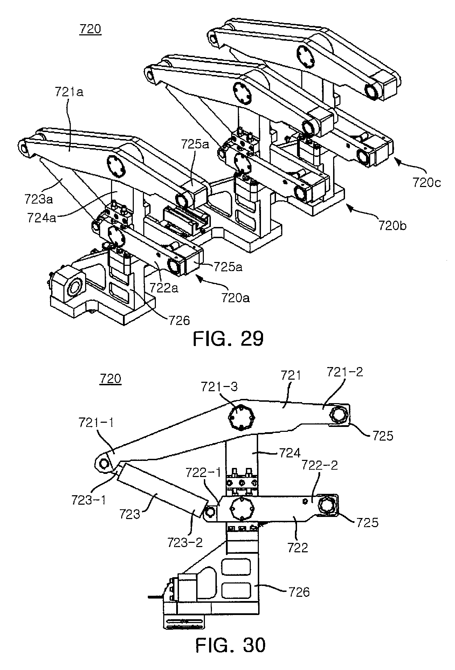

The transfer clamping unit 720 is linearly movable from one end to another end of the frame 710. The transfer clamping unit 720 may clamp a metal plate received from an external device such as a crane and transfer the metal plate to the metal plate cutting device 100a (refer to FIG. 1) connected to the frame 710. The transfer clamping unit 720 will be described later in more detail with reference to FIGS. 29 and 30.

The transfer motor 730 may be connected to an end of the frame 710 and to the transfer clamping unit 720 through a ball screw so as to support transfer operations of the transfer clamping unit 720. That is, the transfer motor 730 provides driving power to linearly move the transfer clamping unit 720 from one end to another end of the frame 710.

For clarity of description, the current exemplary embodiment is described under the assumption that the transfer motor 730 and the transfer clamping unit 720 are connected through a ball screw. However, this is a nonlimiting example. That is, the transfer motor 730 and the transfer clamping unit 720 may be connected through any device capable of converting the driving power of a motor into linear motion.

The guide rolls 740 are arranged along a side of the frame 710 in a direction in which the transfer clamping unit 720 is linearly moved, such that the guide rolls 740 may guide a clamped metal plate while making contact with a side of the clamped metal plate.

In this case, the number of the guide rolls 740 may be two or more as shown in FIGS. 27 and 28 so as to precisely transfer a clamped metal plate to an intended position.

The ball bearings 750 are arranged on an upper surface of the frame 710 to guide a clamped metal plate while making contact with a lower surface of the metal plate.

The number of the ball bearings 750 may be two or more so as to stably transfer a clamped metal plate to an intended position.

As described above, according to the current exemplary embodiment, a metal plate may be stably clamped and precisely moved to a cutting position regardless of the thickness of the metal plate. Hereinafter, the structure of the transfer clamping unit 720 will be described in detail with reference to FIGS. 29 and 30.

FIG. 29 is a perspective view illustrating the transfer clamping unit 720 illustrated in FIG. 27 according to the exemplary embodiment of the present disclosure.

FIG. 30 is a side view illustrating the transfer clamping unit 720 according to the exemplary embodiment of the present disclosure.

Referring to FIGS. 29 and 30, the transfer clamping unit 720 may include a plurality of first clamping members 721, a plurality of second clamping members 722, a plurality of link members 723, a plurality of post units 724, a plurality of prismatic blocks 725, and a base unit 726.

In this case, as shown in FIGS. 29 and 30, a clamping module 720a is constituted by a first clamping member 721a, a second clamping member 722a, a link member 723a, a post unit 724a, and two prismatic blocks 725a, and the transfer clamping unit 720 is formed by connecting clamping modules 720a, 720b, and 720c through the base unit 726.

For conciseness of description, the clamping module 720a will be mainly described. The other clamping modules 720b and 720c may have the same structure as that of the clamping module 720a.

In detail, the first clamping member 721 is placed above a metal plate (refer to reference numeral 200 in FIGS. 1 to 21) to clamp an upper surface of the metal plate as described later.

The second clamping member 722 is placed under the metal plate 200 (refer to FIGS. 1 to 21) to clamp a lower surface of the metal plate 200.

An end 723-1 of the link member 723 is connected to an end 721-1 of the first clamping member 721, and the other end 723-2 of the link member 723 is connected to an end 722-1 of the second clamping member 722. As the link member 723 extends, the end 721-1 of the first clamping member 721 is pushed upward, and thus the distance between another end 721-2 of the first clamping member 721 and another end 722-2 of the second clamping member 722 is decreased.

As the link member 723 extends as described above, the other end 721-2 of the first clamping member 721 supports an upper portion of the metal plate (metal member), and the other end 722-2 of the second clamping member 722 supports a lower portion of the metal plate, thereby clamping the metal plate.

In the exemplary embodiment of the present disclosure, the link member 723 is an extendable and retractable device such as a hydraulic cylinder.

In addition, the first and second clamping members 721 and 722 are respectively coupled to upper and lower portions of the post unit 724 such that clamping is possible by operating the link member 723.

In this case, the first clamping member 721 may be coupled to the post unit 724 in such a manner that the first clamping member 721 is rotatable on a rotation shaft 721-3, and the second clamping member 722 may be fixed to the post unit 724 in a non-rotatable manner.

Therefore, if the link member 723 is extended, the first clamping member 721 is rotated on the rotation shaft 721-3, and thus the other end 721-2 of the first clamping member 721 is pushed against the upper surface of the metal plate. At the same time, the other end 722-2 of the second clamping member 722 fixed to the post unit 724 may support the lower surface of the metal plate.

In addition, the first clamping member 721 may be bent downward from the rotation shaft 721-3. In this case, when the end 721-1 of the first clamping member 721 is moved upward as the link member 723 is extended, the other end 721-2 of the first clamping member 721 may easily push the upper surface of the metal plate.

That is, the end 721-1 of the first clamping member 721 may be located lower than the other end 721-2 of the first clamping member 721.

Since the metal plate is clamped using a 3-bar linkage mechanism constituted by the first clamping member 721, the second clamping member 722, and the link member 723, clamping marks may be formed on the metal plate.

To prevent the formation of clamping marks, as described above, the transfer clamping unit 720 of the exemplary embodiment may further include a prismatic block 726 rotatably connected to at least one of the other end 721-2 of the first clamping member 721 and the other end 722-2 of the second clamping member 722.

In detail, the prismatic block 726 may be connected to at least one of the other end 721-2 of the first clamping member 721 and the other end 722-2 of the second clamping member 722, so as to prevent the formation of clamping marks on the metal plate by compensating for the shape of the other end 721-2 of the first clamping member 721 pushed against the metal plate at a relatively oblique angle.

In this case, a hinge such as a swivel hinge may be used to connect the prismatic block 726 to at least one of the other end 721-2 of the first clamping member 721 and the other end 722-2 of the second clamping member 722. The prismatic block 726 may be a quadrangular block, and in this case, the contact area between the prismatic block 726 and the metal plate may be maximized.

As described above, ends of the first and second As described above, ends of the first and second clamping members 721 and 722 have a freely rotatable rectangular rotary structure, and thus clamping surfaces may be parallel with a material to be cut regardless of the thickness of the material. Therefore, when a material such as a metal plate is transferred to a cutting position, clamping marks may not be formed on the material.

As described above, the clamping modules 720a, 720b, and 720c are combined through the base unit 726 disposed under the clamping modules 720a, 720b, and 720c, thereby forming the transfer clamping unit 720.

That is, the base unit 726 disposed under post units 724a, 724b, and 724c combines the clamping modules 720a, 720b, and 720c to the transfer clamping unit 720.

As described above, the transfer motor 730 is connected to the base unit 726 through the ball screw (not shown) so as to linearly move the transfer clamping unit 720 from one end to another end of the frame 710. That is, the transfer clamping unit 720 may stably transfer a metal plate by using only one transfer motor such as the transfer motor 730.

For example, if the transfer motor 730 is operated by an external control command, the transfer clamping unit 720 is moved toward the cutting unit 160, and thus a metal plate clamped by the transfer clamping unit 720 may be transferred toward the cutting unit 160.

In addition, as described above, a side of the metal plate is in contact with the guide rolls 740 arranged in a direction in which the transfer clamping unit 720 is linearly moved, and thus the metal plate may be precisely transferred to an intended position without being rotated.

That is, even if the metal plate has a very large thickness (for example, a thickness of 100 mm or greater) and a very large width, rotation of the metal plate may be prevented, and thus the metal plate may be precisely transferred to a cutting position.

In addition, since the lower surface of the metal plate is placed on the ball bearings 750, the lower surface of the metal plate may not be scratched by friction.

As described above, according to the exemplary embodiment, a side of a metal plate to be cut is brought into contact with the guide rolls 740 to stably align the metal plate, and when the distance between the other ends 721-2 and 722-2 of the first and second clamping members 721 and 722 is decreased using the hydraulic cylinder 723 of the transfer clamping unit 720 so as to clamp the metal plate, clamping surfaces may be parallel with each other owing to the prismatic block 725. That is, metal plates having various thicknesses may be transferred without surface defects.

In addition, when a clamped metal plate is transferred toward the cutting unit 160 using the transfer motor 730, even though the width of the metal plate is large, the metal plate may be stably aligned and clamped, and thus errors caused by rotation of the metal plate may not occur. That is, the metal plate may be precisely transferred to a cutting position using the transfer motor 130.

## Claims

1. A metal plate cutting device comprising:
a table configured to receive a metal plate on an upper surface thereof;
a frame unit supported on the upper surface of the table; and
a cutting unit movable along the frame unit,
wherein the cutting unit comprises a saw unit configured to cut the metal plate while rotating on a rotation shaft located above the metal plate.

2. The metal plate cutting device of claim 1, wherein when the cutting unit is moved right along the frame unit, the saw unit is rotated clockwise to cut the metal plate, and
when the cutting unit is moved left along the frame unit, the saw unit is rotated counterclockwise to cut the metal plate.

3. The metal plate cutting device of claim 1, wherein while the cutting unit is moved along the frame unit, the saw unit is rotated to cut the metal plate.

4. The metal plate cutting device of claim 1, further comprising:
a first driving unit configured to move the cutting unit; and
a second driving unit configured to rotate the saw unit.

5. The metal plate cutting device of claim 4, wherein the frame unit comprises a screw part, and
as the first driving unit rotates the screw part, the cutting unit connected to the screw part is moved.

6. The metal plate cutting device of claim 4, wherein the first driving unit drives a transfer rail to move the cutting unit connected to the transfer rail.

7. The metal plate cutting device of claim 1, wherein the frame unit comprises: a first frame unit supported by the table; and a second frame unit bent from the first frame unit and parallel with the upper surface of the table, and
the cutting unit is moved along the second frame unit.

8. The metal plate cutting device of claim 1, further comprising a separator disposed at a rear side of the cutting unit in a moving direction of the cutting unit so as to space cut sections of the metal plate a predetermined distance from each other after the cutting unit passes.

9. The metal plate cutting device of claim 1, wherein the separator comprises: a wedge part configured to be disposed between the cut sections of the metal plate; and a third driving unit configured to move the wedge part,
wherein the third driving unit inserts the wedge part between the cut sections of the metal plate after the cutting unit moves a predetermined distance.

10. The metal plate cutting device of claim 1, wherein the table comprises a main body and a support disposed on the main body to support the metal plate.

11. The metal plate cutting device of claim 10, wherein the support comprises a plurality of ball casters configured to make point contact with the metal plate.

12. The metal plate cutting device of claim 1, further comprising a loading unit configured to load the metal plate onto the table.

13. The metal plate cutting device of claim 1, further comprising a fixing unit configured to fix the metal plate by pressing the metal plate toward the table.

14. The metal plate cutting device of claim 1, wherein heat-dissipating holes are formed in the saw unit to dissipate heat from the saw unit.

15. The metal plate cutting device of claim 1, wherein a pair of cutting units are provided.

16. The metal plate cutting device of claim 1, wherein the cutting unit is moved in parallel with the upper surface of the table.

17. The metal plate cutting device of claim 1, wherein the saw unit has a circular shape.

18. The metal plate cutting device of claim 4, wherein the first driving unit is a hydraulic cylinder.

19. The metal plate cutting device of claim 1, further comprising a transfer device disposed near the cutting unit to transfer the metal plate from an external device to the cutting unit,
wherein the transfer device comprises a transfer clamping unit configured to clamp the metal plate and transfer the metal plate to the cutting unit,
wherein the transfer clamping unit comprises: at least one first clamping member disposed above the metal plate; at least one second clamping member disposed under the metal plate; and at least one link member having an end connected to an end of the first clamping member and another end connected to an end of the second clamping member, wherein as the link member extends, the end of the first clamping member is pushed upward, and a distance between another end of the first clamping member and another end of the second clamping member is narrowed.

20. The metal plate cutting device of claim 19, wherein the transfer clamping unit further comprises at least one post unit having an upper portion coupled to the first clamping member and a lower portion coupled to the second clamping member,
wherein the first clamping member is rotatably coupled to the post unit.

21. The metal plate cutting device of claim 20, wherein the end of the first clamping member is lower than the other end of the first clamping member but higher than the end of the second clamping member.

22. The metal plate cutting device of claim 21, wherein as the link member extends, the other end of the first clamping member supports an upper portion of the metal member, and the other end of the second clamping member supports a lower portion of the metal member.

23. The metal plate cutting device of claim 22, wherein the link member is a hydraulic cylinder.

24. The metal plate cutting device of claim 19, wherein the transfer clamping unit further comprises a prismatic block rotatably connected to at least one of the other end of the first clamping member and the other end of the second clamping member through a swivel hinge.

25. The metal plate cutting device of claim 24, wherein the prismatic block is a quadrangular block.

26. The metal plate cutting device of claim 20, wherein the transfer clamping unit further comprises a base unit disposed under the at least one post unit to connect the at least one post unit as a unit.

27. The metal plate cutting device of claim 26, further comprising a transfer motor connected to an end of the frame,
wherein the transfer motor is connected to the end of the frame through the base unit and a ball screw so as to linearly move the transfer clamping unit from one end to another end of the frame.

28. The metal plate cutting device of claim 19, further comprising a plurality of guide rolls arranged along a side of the frame in a direction in which the transfer clamping unit is linearly moved, so as to guide transferring of the metal plate while making contact with a side of the metal plate clamped by the transfer clamping unit.

29. The metal plate cutting device of claim 28, further comprising ball bearings arranged on an upper surface of the frame so as to guide transferring of the metal plate clamped by the transfer clamping unit while making contact with a lower surface of the metal plate.

30. The metal plate cutting device of claim 1, wherein the frame unit comprises a transfer rail comprising a transfer shaft extending therein in a first direction, and
the cutting unit is coupled to the transfer shaft, in a state in which the cutting unit surrounds a portion of the transfer rail, so as to be transferred in the first direction.

31. The metal plate cutting device of claim 30, wherein the cutting unit comprises:
a housing surrounding a portion of the transfer rail;
a transfer member extending in the housing from an inner surface of the housing and coupled to the transfer shaft; and
a circular saw disposed on a lower side of the housing and configured to rotate on a rotation shaft extending in a second direction perpendicular to the first direction.

32. The metal plate cutting device of claim 30, wherein the transfer shaft is a screw shaft, and
the transfer member is a ball screw member coupled to the screw shaft for converting rotational motion into linear motion.

33. The metal plate cutting device of claim 32, further comprising a servo motor disposed on an end of the transfer rail and connected to an end of the screw shaft so as to provide rotational power to the screw shaft.

34. The metal plate cutting device of claim 31, wherein the transfer rail comprises a cavity to accommodate the transfer shaft and the transfer member.

35. The metal plate cutting device of claim 34, wherein the transfer member extends in the cavity from an inner upper surface of the housing.

36. The metal plate cutting device of claim 31, wherein the transfer rail comprises a plurality of guide rails protruding upward from opposite sides with respect to the transfer shaft and extending in the first direction, and
the housing comprises a plurality of slidable members configured to slide in the first direction in a state in which the slidable members are respectively coupled to the guide rails.

37. The metal plate cutting device of claim 31, wherein the housing comprises a plurality of oilless bearings embedded in the housing and partially exposed on inner surfaces of the housing, and
the housing is configured to be transferred in the first direction in a state in which the housing is in contact with outer surfaces of the transfer rail through the oilless bearings.

38. The metal plate cutting device of claim 37, wherein a plurality of guide parts are formed on the outer surfaces of the transfer rail in such a manner that the guide parts protrude in width directions of the transfer rail and extend in the first direction, and
the housing is configured to be transferred in the first direction in a state in which the oilless bearings are in contact with the guide parts.

39. The metal plate cutting device of claim 38, wherein the oilless bearings are embedded in the housing together with wedge members to adjust heights of the oilless bearings embedded in the housing.

40. The metal plate cutting device of claim 1, wherein the cutting unit further comprises: a first driving unit; and a power transmission unit configured to transmit driving power of the first driving unit to the saw unit so as to rotate the saw unit.

41. The metal plate cutting device of claim 40, wherein the power transmission unit comprises a plurality of gear units.

42. The metal plate cutting device of claim 41, wherein each of the gear units comprises a shaft and at least one gear connected to the shaft and engaged with a gear of another gear unit, and the gear units perform speed reduction in three to four steps.

43. The metal plate cutting device of claim 42, wherein the power transmission unit further comprises bearing units supporting the shafts.

44. The metal plate cutting device of claim 42, wherein the gears of the gear units engaging with each other are sized in such a manner that a gear relatively distant from the first driving unit has a diameter greater than that of a gear relatively close to the first driving unit.

45. The metal plate cutting device of claim 40, wherein the power transmission unit transmits driving power of the first driving unit through three or more speed reduction steps.

46. The metal plate cutting device of claim 40, wherein the power transmission unit comprises:
a pulley having a side connected to the first driving unit so as to be rotated by receiving driving power from the first driving unit;
an input gear unit connected to another side of the pulley to receive the driving power of the first driving unit through the pulley;
a first gear unit engaged with the input gear unit; and
a second gear unit engaged with the first gear unit.

47. The metal plate cutting device of claim 46, wherein the power transmission unit further comprises an output gear unit having a side engaged with the second gear unit and another side connected to the saw unit so as to rotate the saw unit.

48. The metal plate cutting device of claim 47, wherein the first gear unit comprises:
a first first gear engaged with an input gear of the input gear unit; and
a first second gear engaged with a second first gear of the second gear unit.

49. The metal plate cutting device of claim 48, wherein the second gear unit comprises: the second first gear; and a second second gear engaged with an output gear of the output gear unit.

50. The metal plate cutting device of claim 47, wherein the power transmission unit further comprises an anti-reverse rotation gear unit comprising an anti-reverse rotation gear engaged with an output gear of the output gear unit so as to prevent reverse rotation of the output gear unit.

51. The metal plate cutting device of claim 46, wherein the power transmission unit further comprises:
a third gear unit engaged with the second gear unit; and
an output gear unit having a side engaged with the third gear unit and another side connected to the saw unit so as to rotate the saw unit.

52. The metal plate cutting device of claim 41, wherein the power transmission unit further comprises a housing unit accommodating the gear units.

53. The metal plate cutting device of claim 52, wherein the housing unit is filled with a lubricant oil circulating to inside and outside regions of the housing.

54. The metal plate cutting device of claim 52, wherein the housing unit has an L-shape because an output gear unit of the gear units connected to the saw unit is longer than the other gear units.

55. The metal plate cutting device of claim 54, wherein a self-aligning bearing is disposed at a center position of the output gear unit.

56. The metal plate cutting device of claim 49, wherein a gear ratio between the output gear unit and the second gear unit engaged with the output gear unit is 2 or less.
